Europäisches Patentamt

**European Patent Office**

Office européen des brevets

(19)

(11) Veröffentlichungsnummer: **0 048 991**
B1

(12) EUROPÄISCHE PATENTSCHRIFT

(45) Veröffentlichungstag der Patentschrift:
30.05.84

(51) Int. Cl.³: **G 06 F 11/00**

(21) Anmeldenummer: **81107744.5**

(22) Anmeldetag: **29.09.81**

(54) Verfahren und Anordnung zur Behandlung von Unterbrechungsbedingungen während des Arbeitsablaufes in Datenverarbeitungsanlagen mit Mikroprogrammsteuerung.

(30) Priorität: **30.09.80 DE 3036926**

(43) Veröffentlichungstag der Anmeldung:
**07.04.82 Patentblatt 82/14**

(45) Bekanntmachung des Hinweises auf die Patenterteilung:
**30.05.84 Patentblatt 84/22**

(84) Benannte Vertragsstaaten:
**AT BE CH FR GB IT LI NL SE**

(56) Entgegenhaltungen:
**DE - A - 2 237 925**
**DE - A - 2 248 451**
**DE - A - 2 324 906**
**DE - B - 2 737 133**
**US - A - 3 548 178**
**US - A - 3 784 801**
**US - A - 3 988 714**
**US - A - 4 045 661**
**US - A - 4 130 240**

**Rainer Klar, Heide Wichmann: "Mikroprogrammierung",**
**Juni 1975, Bd 8, Nr. 3, S. 154-159**

(73) Patentinhaber: **SIEMENS AKTIENGESELLSCHAFT,**
**Berlin und München Wittelsbacherplatz 2,**
**D-8000 München 2 (DE)**

(72) Erfinder: **Stadlmeier, Hans, Dipl.-Ing., Aichacher**
**Strasse 2, D-8000 München 70 (DE)**
Erfinder: **Strutynski, Waldemar, Dipl.-Ing.,**
**Ammerseestrasse 2, D-8027 Neurled (DE)**

ACTORUM AG

## Beschreibung

Die Erfindung betrifft ein Verfahren und eine Anordnung zur Behandlung von Unterbrechungsbedingungen während des Arbeitsablaufes in Datenverarbeitungsanlagen mit Speichersteuerung und Mikroprogrammsteuerung, die von einem zentralen Taktgenerator abhängig ist, der für die Ausführung einer Elementaroperation pro Arbeitszyklus der Mikroprogrammsteuerung mittels einer Taktkette mehrere Taktsignale erzeugt und beim Auftreten einer Unterbrechungsbedingung durch eine Überwachungseinrichtung in Verbindung mit einer Prüfeinrichtung am Ende des laufenden Arbeitszyklus unterbrechbar ist.

Ein Mikroprogramm ist eine Folge von Elementaroperationen (Mikrobefehlen), die insgesamt einen Makrobefehl definieren; vgl. Löbel, Müller, Schmid, Lexikon der Datenverarbeitung, S. 340.

Bedingt durch den sehr komplexen Aufbau moderner Datenverarbeitungsanlagen kann das Auftreten von Fehlern nie von vornherein ausgeschlossen werden. Um dennoch fehlerfreie Ergebnisse zu erzielen, ist es notwendig, Vorkehrungen zu treffen, damit auftretende Fehler festgestellt und gegebenenfalls korrigiert werden. Das hat zur Folge, dass nach Feststellung eines Fehlers das laufende Programm zunächst unterbrochen werden muss.

Gemäss der DE-AS 22 48 451 ist die Überprüfung auf Vorliegen eines Fehlers und der Stopp des die Arbeitstakte liefernden Generators miteinander in der Weise gekoppelt, dass mit einem am Ende des Maschinenzyklus in diesen eingefügten Prüftakt alle Prüfpunkte der Anlage abgefragt und bei Vorliegen eines Fehlers der Taktgenerator während einer Zeit gestoppt wird, in der noch alle Daten in den Registern in Bezug auf die gerade ausgeführte Operation vorhanden sind. Das Stoppen der Anlage mit dem letzten Takt im Maschinenzyklus hat zugleich den Vorteil, dass nach Ersetzen der fehlerhaften Daten in den Registern ein einfacher Wiederstart möglich ist.

Bei der Anordnung nach der DE-AS 23 24 906 wird bei Erkennen eines Fehlers die Anlage in einen bereits durchlaufenen Zustand zurückgesetzt und danach der den Fehler herbeiführende Ablauf von Steuerschritten mit verringerter Taktfrequenz langsamer und gegebenenfalls fehlerfrei wiederholt. Wie aber bereits in der DE-PS 27 37 133 (Spalte 3, Zeile 68 bis Spalte 4, Zeile 8) ausgeführt ist, wird gerade bei mikroprogrammierten Steuereinheiten das Problem der Ausbreitung der Auswirkungen von Fehlern nicht verhindert, insbesondere wenn sich die Fehlerursache über mehrere Elementaroperationen erstreckt.

Bei der durch die DE-PS 27 37 133 bekannten Anordnung ist deshalb mit dem als Überwachungseinrichtung arbeitenden Fehlerregister ein Analysenetzwerk als Prüfeinrichtung gekoppelt, die über einen Pausengenerator den Taktgenerator jeweils vor dem eine neue Elementaroperation einleitenden Takt des Arbeitszyklus stoppt und eine Fehlerbehandlungsroutine vorbereitet, die dann nach Ablauf der durch den Pausengenerator vorgegebenen Pausenzeit mit Freigabe des Taktgenerators bei dem gesperrten Takt gestartet wird. Diese bekannte Anordnung reagiert damit nur auf Fehler, die eine Überleitung in eine Fehlerbehandlungsroutine erfordern.

Aus der US-A-354 8178 ist eine Anordnung bekannt, bei der der Störpegel zwischen einem ROS-Speicher 10 und Leseverstärkern 12 überwacht und der Arbeitstaktzyklus des Taktgenerators 20 gesperrt werden, wenn der Störpegel zu gross ist, so dass mit zu hohem Störpegel gelesene Mikrobefehle mit Beginn des nächsten Arbeitszyklus (Takt T1) nicht zur Ausführung gelangen. Durch Umschalten auf einen Hilfstaktgenerator 30, der einen gleichen Taktzyklus liefert, wie der Taktgenerator 20, wird der ROS-Lesezyklus bei unterdrücktem Übernahmetakt T1 solange wiederholt, bis der Störpegel wieder abgeklungen ist. Das Mikroprogramm pausiert also für die Dauer der Umschaltung, während Prüffunktionen mit den Hilfsakten durchgeführt werden. Die Hilfstakte steuern dabei keine Prüfeinrichtung zur Behandlung von Unterbrechungsbedingungen, sondern sie halten die Überwachung aufrecht.

Des weiteren wird wiederum nur eine kleine Gruppe möglicher Fehler erfasst, wobei es äusserst schwierig ist, den kritischen Schwellenwert für den Störpegel festzulegen. Zu Beginn der Umschaltung liegt die Art der Störung bereits fest, so dass nach der Umschaltung nicht mehr geprüft wird, um welche Art von Störung es sich handelt und welche Massnahmen nach Ablauf der Unterbrechung zu ergreifen sind.

Nun können bei modernen Anlagen Unterbrechungen des Normalablaufs nicht nur durch Fehler unterschiedlicher Art, z.B. Hardware-Fehler oder Programmzugriffsfehler, notwendig werden, sondern darüberhinaus auch durch weitere Ereignisse, z.B. Stopp oder Rücksetzen der Anlage, Adressenvergleich mit verschiedenen Reaktionen. Dabei ist es notwendig, dass die Anlage bei jeder Unterbrechung des Normalablaufs stets einen eindeutigen und reproduzierbaren Zustand einnimmt, der eine Rückkehr in den normalen Arbeitsablauf ohne Schwierigkeit ermöglicht und kritische Zeitbedingungen ausschliesst. Auch darf die Parallelarbeit von selbständigen Funktionseinheiten der Anlage dadurch nicht unnötig behindert werden.

Ausgehend von einem Verfahren der eingangs genannten Art löst die Erfindung diese Aufgabe durch die im Patentanspruch 1 angegebenen Merkmale.

Gemäss der Erfindung werden also alle Ereignisse, die eine Unterbrechung des Normalablaufs erfordern, in die Überwachung einbezogen, und es wird eine strikte Trennung zwischen normalen Arbeitszyklen für die Ausführung von Elementaroperationen und gesonderten Prüfzyklen vorgenommen, in denen die Entscheidung über die Weiterarbeit gefällt wird. Durch die Unterscheidung zwischen Arbeitszyklen und Prüfzyklen bei gleichzeitigem Stopp der Mikroprogrammsteuerung werden zeitkritische Verhältnisse weitgehendst ausgeschaltet und die Mikroprogrammsteuerung entlastet. Dabei können auch komplexe Ereigniskombinationen erkannt und behandelt werden. Da der Normalablauf durch den Umfang der Prüfeinrichtung auch nicht verändert wird, ist diese an die verschiedensten Rand- und Systembedingungen leicht anpassbar und ausbaufähig. Andererseits wird der Normalablauf durch das Vorhandensein der Prüfeinrichtung nicht verzögert, da ein Prüfzyklus ja nur bei Ereignissen, die ohnehin Zeit kosten, eingeleitet wird. Weitere Ausgestaltungen des Verfahrens gemäss der Erfindung ergeben sich aus den Unteransprüchen.

Eine Anordnung zur Durchführung des Verfahrens gemäss der Erfindung ist im Anspruch 14 gekennzeichnet.

Um auch unmittelbar nach Wiederstart des Taktgenerators der Taktversorgung einen Prüfzyklus ausführen zu können, weist der Taktgenerator gemäss einer Weiterbildung der Erfindung Einrichtungen zur Ableitung eines weiteren Prüfsignals für die Überwachungseinrichtung bei Wiederstart des Taktgenerators nach einem Generatorstop auf.

Im folgenden wird die Erfindung anhand eines Ausführungsbeispiels näher erläutert. Im einzelnen zeigen:

Fig. 1 das Blockschaltbild eines Teiles einer Datenverarbeitungseinrichtung,

Fig. 2 das Blockschaltbild der in Fig. 1 gezeigten Taktversorgung TV,

Fig. 3 das Blockschaltbild der in Fig. 1 gezeigten Überwachungs- und Prüfeinrichtung UE/PE,

Fig. 4 die schematische Darstellung des Grundprinzips der Taktverteilung,

Fig. 5 ein Flussdiagramm für die Entscheidungslogik der Überwachungseinrichtung gemäss Fig. 3,

Fig. 6 ein Flussdiagramm für die Entscheidungslogik des Verknüpfungsnetzwerkes der Überwachungseinrichtung gemäss Fig. 3 und

Fig. 7 bis 10 Ablaufdiagramme für die Zyklenfolge bei nacheinander einzeln oder zu mehreren gleichzeitig auftretenden unterschiedlichen Unterbrechungsanforderungen.

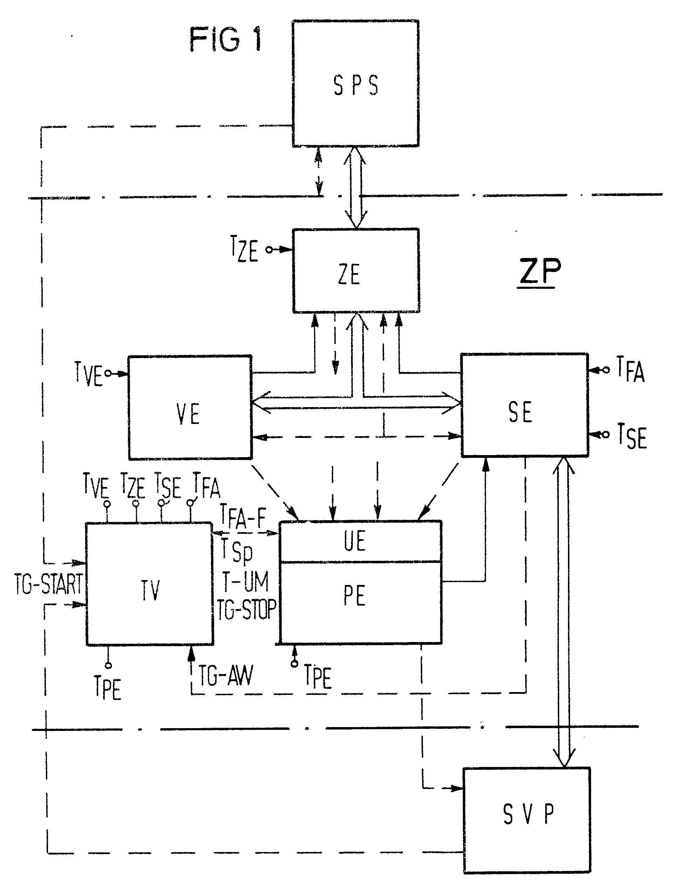

Fig. 1 zeigt in schematischer Darstellung die für das Verständnis des Ausführungsbeispiels erforderlichen Teile einer Datenverarbeitungseinrichtung mit dem Speichersystem SPS, dem Zentralprozessor ZP und einem Serviceprozessor SVP für Wartungsaufgaben. Der Zentralprozessor ZP ist in mehrere Teileinheiten SE, VE und ZE mit einer gemeinsamen Mikroprogrammsteuerung unterteilt, denen Aufgaben des Zentralprozessors ZP fest zugeordnet sind, die teilweise parallel zueinander ausgeführt werden können. Die Teileinheit VE stellt die eigentliche Verarbeitungseinheit des Zentralprozessors dar, die die Verknüpfung der Operanden vornimmt und dabei in an sich bekannter Weise arithmetische, logische, Verschiebe- und Transferfunktionen ausführt.

Die Teileinheit ZE hat als Zugriffseinheit die Aufgabe, den Verkehr zwischen dem Speichersystem SPS und dem Zentralprozessor ZP abzuwikkeln und die Verarbeitungseinheit VE mit Daten sowie die Steuereinheit SE mit Mikrobefehlen zu versorgen. Bei einem Datenzugriff mit virtuellen Adressen führt sie auch die Adressenübersetzung in reelle Adressen durch.

Die Teileinheit SE steuert als Steuereinheit den gesamten Mikroprogrammablauf im Zentralprozessor ZP sowie die Schnittstellen zum Serviceprozessor SVP und zu gegebenenfalls anderen Prozessoren, wie Ein/Ausgabeprozessoren. Darüber hinaus kann diese Einheit eigene Funktionen parallel zur Verarbeitungseinheit VE und zur Zugriffseinheit ZE ausführen, z.B. Sprung-, Setz- und Zählfunktionen. Direktoperanden bereitstellen usw.

Diese Einheit umfasst demzufolge einen umladbaren Mikrobefehlsspeicher und die Mikrobefehlsregister für die anderen Teileinheiten VE und ZE sowie Einrichtungen zur Folgeadressrechnung.

Ähnlich arbeitende Datenverarbeitungseinrichtungen mit parallel arbeitenden Teileinrichtungen sind z.B. in der DE-PS 27 04 560 beschrieben oder bei den Modellen 7.541 des Siemens Systems 7.500 bzw. 7.760 des Siemens Systems 7.700 verwirklicht.

Zur Koordinierung und Steuerung des Arbeitsablaufes des Zentralprozessors ZP ist des weiteren in an sich bekannter Weise eine Taktversorgung TV vorgesehen, die die Teileinheiten periodisch mit Arbeitstakten versorgt. Darüber hinaus ist die Anlehnung an die DE-PS 27 37 133 eine Überwachungseinrichtung UE zur Feststellung von Unterbrechungsereignissen und eine Prüfeinrichtung PE vorgesehen, die mit der Taktversorgung TV eng zusammenarbeitet und die Steuerung bei Unterbrechung des normalen Arbeitsablaufes des Zentralprozessors ZP übernimmt.

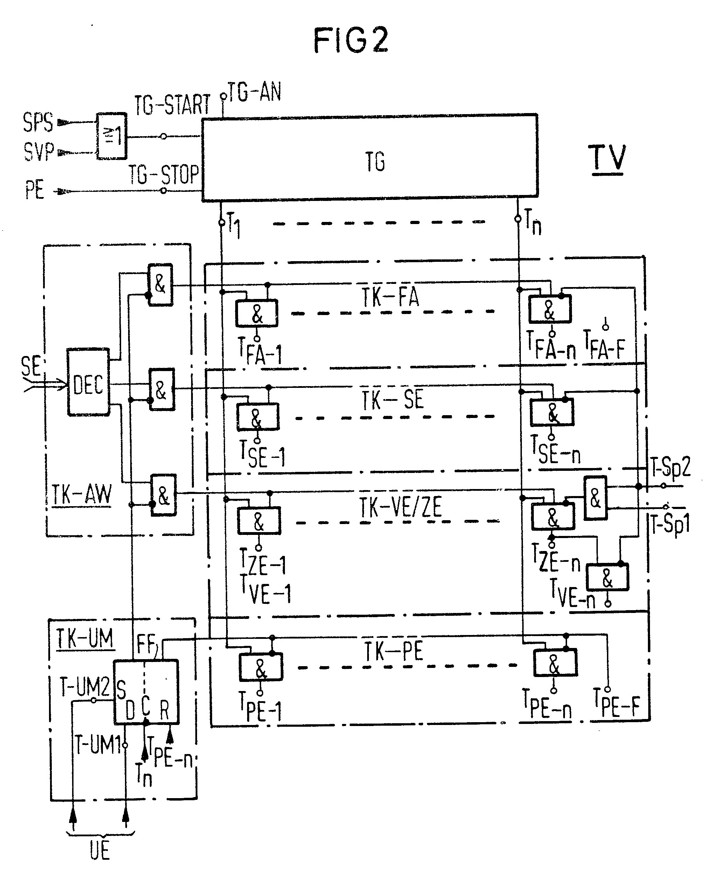

Die in Fig. 2 gezeigte Taktversorgung TV gliedert sich in den Taktgenerator TG, der zyklisch aufeinanderfolgende Grundtakte $T_1$ bis $T_n$ für die nachfolgenden Taktketten TK . . . zur Versorgung der einzelnen Teileinheiten SE, VE und ZE des Zentralprozessors ZP in Fig. 1 liefert. Die Auswahl der einzelnen benötigten Taktketten erfolgt durch die Einrichtung TK-AW in Verbindung mit der Taktkettenumschaltung TK-UM.

Der Start des Taktgenerators erfolgt über den Eingang TG-START durch den Serviceprozessor SVP oder durch das Speichersystem SPS nach einem erfolgten Speicherzugriff, falls die Anlage vorher im Stoppzustand war, jeweils mit dem ersten Takt $T_1$. Dagegen wird der Taktgenerator TG normalerweise durch die Prüfeinrichtung PE des Zentralprozessors ZP über den Eingang TG-STOP angehalten, und zwar jeweils am Ende eines Taktzyklus, also nach Abgabe des Taktes $T_n$. Keiner der Takte oder Taktphasen $T_1$ bis $T_n$ ist dann wirksam.

Insgesamt sind drei Grundtaktketten für die einzelnen Prozessorteileinheiten VE, ZE und SE sowie zwei Grundtaktketten für die Zyklustypen FA und PE, die die Folgeadressrechnung in der Steuereinheit SE bzw. die Reaktion durch die Prüfeinrichtung PE steuern, vorgesehen. Diese fünf Grundtaktketten sind in vier Taktketten TK-PE, TK-FA, TK-SE und TK-VE/ZE zusammengefasst, die zum Teil parallel zueinander ablaufen können. Für die Wirksamschaltung der jeweils benötigten Taktketten trifft die Einrichtung TK-UM zunächst eine Vorauswahl zwischen der Taktkette TK-PE und allen übrigen Taktketten. Diese Einrichtung besteht aus einem herkömmlichen D-Flipflop FF, das mit der Rückflanke des letzten Taktes $T_n$ des Taktgenerators TG getaktet wird. Auf den Rückstelleingang R dieses Flipflops FF wirkt der letzte Takt $T_{PE-n}$ der Taktkette TK-PE, so dass nach jedem Prüfzyklus wieder auf einen Arbeitszyklus umgeschaltet wird, während die Umschaltung vom Arbeitszyklus auf den Prüfzyklus jeweils durch ein Signal T-UM1 von der Prüfeinrichtung PE auf den Eingang D ausgelöst wird. Unabhängig davon kann das Flipflop FF statisch über den Setzeingang S mit dem Signal T-UM2 von der Überwachungseinrichtung UE gesetzt und damit auf einen Prüfzyklus umgeschaltet werden, wenn der Taktgenerator TG nach einem Generatorstopp wieder gestartet wird, was durch das Signal TG-AN ausgelöst wird, so dass auch nach einem Wiederanlauf des Taktgenerators TG zunächst ein Prüfzyklus ablaufen kann. Die weitere Kettenauswahl hängt beispielsweise von Gültigkeitsbits der zugehörigen Mikrobefehle in der Steuereinrichtung SE ab. Diese werden in an sich bekannter Weise von einer Verknüpfungsanordnung DEC in Steuersignale für die den auswählbaren Taktketten vorgeschalteten UND-Glieder umgesetzt.

Wie bereits erwähnt, versorgt die Taktkette TK-PE die Prüfeinrichtung PE während eines Prüfzyklus, der nach Bedarf in den normalen Arbeitsablauf des Zentralprozessors eingeschaltet wird. Diese Kette und dieser Prüfzyklus laufen daher nie parallel zu den anderen gezeigten Taktketten für den Zentralprozessor ZP ab. Jedoch kann der Prüfzyklus ohne weiteres parallel zu einem Zugriff zum Speichersystem SPS ablaufen.

Die Taktkette TK-FA für die Folgeadressrechnung in der Steuereinrichtung SE läuft normalerweise parallel zur Taktkette TK-VE und/oder TK-SE ab, um den nächsten Mikrobefehl bereitstellen zu können; sie läuft jedoch allein ab, wenn Einsprungsadressen für eine Adressenumrechnung oder eine Fehlerbehandlungsroutine zu berechnen sind oder wenn bei parallel ausführbaren Befehlen für die Einheit VE oder ZE parallel zur Steuereinheit SE nicht alle Befehle verfügbar sind.

Die Taktkette TK-VE/ZE ist für die Teileinheiten VE und ZE des Zentralprozessors ZP gemeinsam vorgesehen. Ein Unterschied zwischen ihnen besteht jedoch hinsichtlich der jeweils letzten Takte $T_{ZE-n}$ und $T_{VE-n}$ dadurch, dass bei einer generellen Sperre der letzten Zyklustakte der Takt $T_{ZE-n}$ nicht gesperrt wird.

Die Notwendigkeit für ein Sperren der letzten Takte der Taktkette TK-FA und der Taktketten für die Prozessorteileinheiten SE, VE und ZE ergibt sich aus folgender Taktsache: Mit diesen Takten werden jeweils die Eingangsgrössen für eine auszuführende Elementaroperation geändert. Soll aber im Fehlerfall eine Elementaroperation wiederholt werden, dann dürfen die Eingangsgrössen nicht verändert werden, wenn man zusätzliche Massnahmen für ein Rücksetzen in den Ausgangszustand zu Beginn eines Arbeitszyklusses, wie z.B. bei der Anordnung nach der eingangs bereits genannten DE-AS 2324 906 umgehen will. Gleiches gilt für den zyklischen Betrieb des Zentralprozessors ZP, z.B. für den Wartezustand mit zyklischer Wiederholung ein- und derselben Elementaroperation. In diesem Falle aber wird der Takt $T_{ZE-n}$ nicht mitgesperrt, um einen Anstoss für einen Zugriff zum Speichersystem SPS zu ermöglichen.

Bei der Anordnung nach Fig. 2 wird die Taktsperre durch die beiden Signale T-Sp1 und T-Sp2 der Überwachungseinrichtung UE vorgenommen, indem beim Vorliegen beider Signale alle letzten Zyklustakte, also $T_{FA-n}$, $T_{SE-n}$ $T_{VE-n}$ und $T_{ZE-n}$, gesperrt werden, während mit dem Signal T-Sp2 allein alle diese Takte mit Ausnahme des Taktes $T_{ZE-n}$ gesperrt werden.

Mit von der Taktkette TK-FA abgeleiteten Sondertakten, z.B. einem Taktfenster $T_{FA-F}$, das die Takte $T_{FA-(n-1)}$ und $T_{FA-n}$ überdeckt, wird während eines jeden Arbeitszyklus z.B. auch die Überwachungseinrichtung UE in Fig. 1 angesteuert, um zu prüfen, ob ein den Normalablauf des Zentralprozessors ZP unterbrechendes Ereignis aufgetreten und demzufolge auf einen Prüfzyklus für die Prüfeinrichtung PE umzuschalten ist.

Im übrigen kann die Taktversorgung TV in Anlehnung an die der DE-AS 26 19 445 oder der der DE-OS 29 07 170 ausgebildet sein.

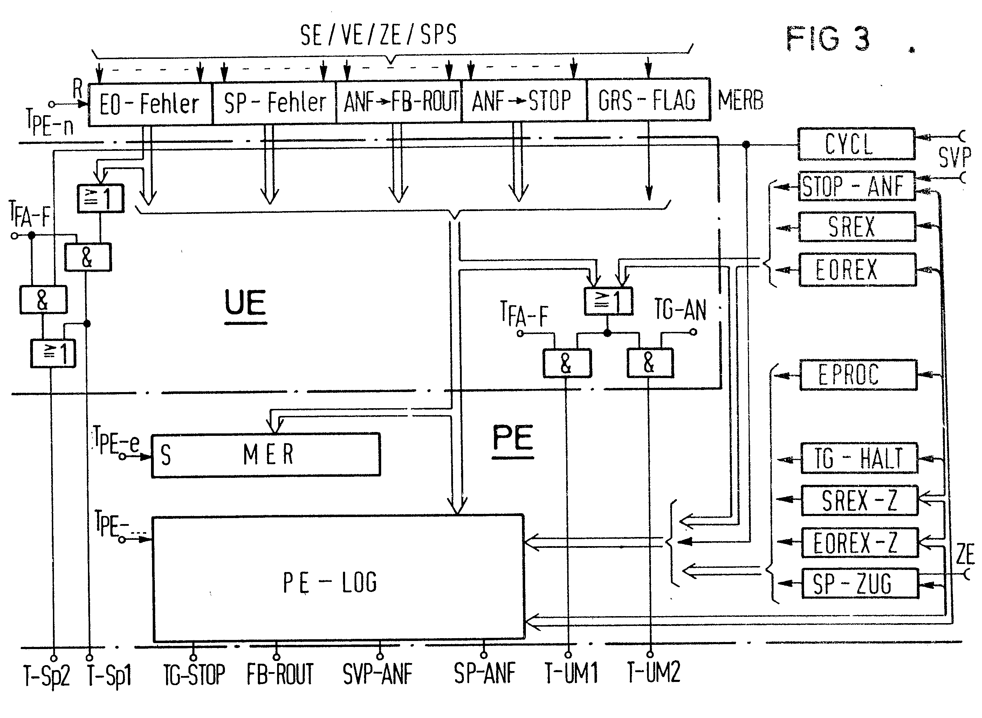

Die in Fig. 3 gezeigte Überwachungs- und Prüfeinrichtung UE/PE besteht im wesentlichen aus einem Pufferregister MERB und dem nachgeschalteten eigentlichen Maschinenfehlerregister MER, einigen Merkern CYCL, STOP-ANF, SREX, EOREX, EPROC, TG-HALT und SP-ZUG, z.B. in Form von Flipflops, die gegebenenfalls in andere Register eingefügt sein können, zwei Zählern SREX-Z und EOREX-Z und einer Verknüpfungslogik PE-LOG, sowie einigen Verknüpfungsgliedern für die Überwachungseinrichtung UE.

Das Pufferregister MERB sammelt in herkömmlicher Weise wie ein Maschinenfehlerregister alle Fehlerereignisse und Unterbrechungsanforderungen, die während der Durchführung einer Elementaroperation (EO) auftreten. Dabei wird zwischen verschiedenen Gruppen von Fehler- und Unterbrechungsanforderungen unterschieden:

a) EO-Fehler umfassen u.a. Paritätsfehler in der Verarbeitungseinheit VE, in der Zugriffseinheit ZE, im Befehlspuffer, in den Mikrobefehls- oder Mikrobefehlsadressenregistern sowie im Adressenspeicher; Parameterfehler in der Verarbeitungseinheit; Ergebnisvergleichsfehler in der Verarbeitungseinheit VE oder bei der Mikrobefehlsfolgeadressierung usw.

b) Speicher-Fehler umfassen z.B. Paritätsfehler im Adressenübersetzungsspeicher oder Hit-Fehler bei der Adressenübersetzung; Fehler beim Schreiben oder Lesen im Arbeitsspeicher des Speichersystems SPM; Paritätsfehler der Lesedaten, Zeitfehler beim Arbeitsspeicherverkehr; Paritätsfehler im Steuerspeicher der Steuereinrichtung SE usw.

c) Anforderungen mit Einsprung in die Fehlerbehandlungsroutine FB-ROUT ergeben sich z.B. durch Schutzverletzung bei virtuellem Speicherzugriff, durch Adressenüberschreitung, durch Schlüsselfehler sowie durch erfüllte Adressenvergleiche von Speicheradressen, Mehrzweckregisteradressen oder Mikrobefehlsadressen.

d) Anforderungen mit Überleitung in den Stopp-Zustand ergeben sich ebenfalls durch einen erfüllten Adressenvergleich, wenn statt des Einsprungs in die Fehlerbehandlungsroutine als Reaktionsmodus der Stopp-Zustand erforderlich ist.

e) GRS-FLAG, dessen Bit bei Rücksetzen der Maschine gesetzt wird.

Diese Unterscheidung ermöglicht zusammen mit einigen der genannten Merker in vorteilhafter Weise eine Reaktion nach Prioritäten gestaffelt.

Das Pufferregister MERB und die Merker STOP-ANF, SREX und EOREX werden laufend von der Überwachungseinrichtung UE überprüft. Für diese Prüfung sind zwei Zeitpunkte massgebend, einmal gegen Ende eines jeden EO-Zyklus mit einem aus Takten, z.B. $T_{FA-(n-1)}$ und $T_{FA-n}$, der Taktkette TK-FA für die Steuerung der Folgeadressen gebildeten Taktfenster $T_{FA-F}$ und zum anderen der Zeitpunkt, wenn der Taktgenerator TG der Taktversorgung TV nach einem Generatorstopp wieder gestartet wird. Sobald zu diesen vorgegebenen Zeitpunkten irgendein Bit im Pufferregister MERB oder den genannten drei Merkern gesetzt ist, wird ein Umschaltesignal für die Umschaltung auf einen Prüfzyklus für die Prüfeinrichtung PE gebildet, und zwar das Signal T-UM1 abhängig vom Taktfenster $T_{FA-F}$ und das Signal T-UM2 beim Starten des Taktgenerators TG in Verbindung mit dem Signal TG-AN. Auf diese Weise ist sichergestellt, dass auch nach jedem Taktgeneratorstart erst einmal ein Prüfzyklus eingeschoben wird und somit erkannt werden kann, ob inzwischen neue Fehler oder Unterbrechungsanforderungen aufgetreten sind. Zum anderen sichern die Merker SREX und EOREX, die bei einer automatischen Wiederholung eines fehlerhaft ausgeführten Speicherzugriffs oder einer Elementaroperation gesetzt werden, dass nach jeder Wiederholung zunächst ein Prüfzyklus eingeschoben wird, um prüfen zu können, ob die Wiederholung erfolgreich war und ob weitere Unterbrechungsanforderungen vorliegen.

Die Überwachungseinrichtung UE führt gleichzeitig zwei weitere Prüfungen durch. Um sicherzustellen, dass bei fehlerhafter Ausführung einer Elementaroperation die Eingangsgrössen für die Elementaroperation nicht verändert werden und die Elementaroperation daher unmittelbar wiederholt werden kann, werden bei einem EO-Fehler die Ergebnistakte und damit die Takte für die Änderung der Eingangsgrössen für eine auszuführende Elementaroperation gesperrt. Im vorliegenden Falle sind das die letzten Taktphasen n der Taktketten TK-FA, TK-SE, TK-VE/ZE. Diese Prüfung muss also entsprechend frühzeitig durchgeführt werden, was somit auch den Beginn des Taktfensters $T_{FA-F}$ z.B. mit der Taktphase (n-1) erklärt.

Gleiches gilt für den zyklischen Betrieb, d.h. für eine fortlaufende Wiederholung einer Elementaroperation, wenn der Merker CYCL gesetzt ist, der daher ebenfalls durch die Überwachungseinrichtung UE überprüft wird. Hierbei wird allerdings nicht der Takt $T_{ZE-n}$ der Taktkette TK-VE/ZE gesperrt, um den Anstoss eines Zugriffs zum Speichersystem SPS zu ermöglichen. All diese Überprüfungen können in an sich bekannter Weise mittels UND-Glieder erfolgen, die durch den Fenstertakt $T_{FA-F}$ freigegeben werden, und denen gegebenenfalls ODER-Glieder für die Bündelung der zu überwachenden Signalleitungen vorgeschaltet sind.

Auch das Verknüpfungsnetzwerk PE-LOG der Prüfeinrichtung PE ist vom Informationsinhalt des Pufferregisters MERB abhängig. Es werden also sowohl die Umschaltung auf einen Prüfzyklus als auch die Arbeit der Prüfeinrichtung PE durch das Pufferregister MERB gesteuert, während im nachgeschalteten Maschinenfehlerregister MER Fehler und Unterbrechungsanforderungen gesammelt werden können, ohne dass die vom Pufferregister MERB gesteuerte Umschaltung behindert wird. Zu diesem Zweck werden im Pufferregister MERB gesetzte Bits für neue Unterbrechungsanforderungen jeweils zu Beginn eines Prüfzyklus in das Maschinenfehlerregister MER übernommen und das Pufferregister MERB am Ende des Prüfzyklus zurückgesetzt.

Für die Arbeit der Prüfeinrichtung PE sind darüber hinaus die gezeigten Merker und Zähler erforderlich. In Verbindung mit den beiden Merkern SREX und EOREX, die bei automatischer Wiederholung wegen eines fehlerhaften Speicherzugriffs oder einer EO-Ausführung gesetzt werden, überwachen die Zähler SREX-Z und EOREX-Z die Anzahl der Wiederholungen, damit nach Ablauf einer vorgegebenen Zahl von Wiederholungen in die Fehlerbehandlungsroutine FB-ROUT übergeleitet werden kann. Der Merker EPROC kennzeichnet den Zustand der Fehlerbehandlung und dient zur Absicherung gegen Doppelfehler, während der Merker TG-HALT im gesetzten Zustand am Ende eines Prüfzyklus zum Generatorstopp führt. Der Merker SP-ZUG wird gesetzt, wenn ein Speicherzugriff gestartet wird. Alle gezeigten Merker sind durch das Verknüpfungsnetzwerk PE-LOG überwachbar und können bis auf den Merker CYCL von diesem beeinflusst werden. Weiterhin können die Merker CYCL und STOP-ANF vom Serviceprozessor SVP und der Merker SP-ZUG von der Zugriffseinheit ZE aus angesteuert werden.

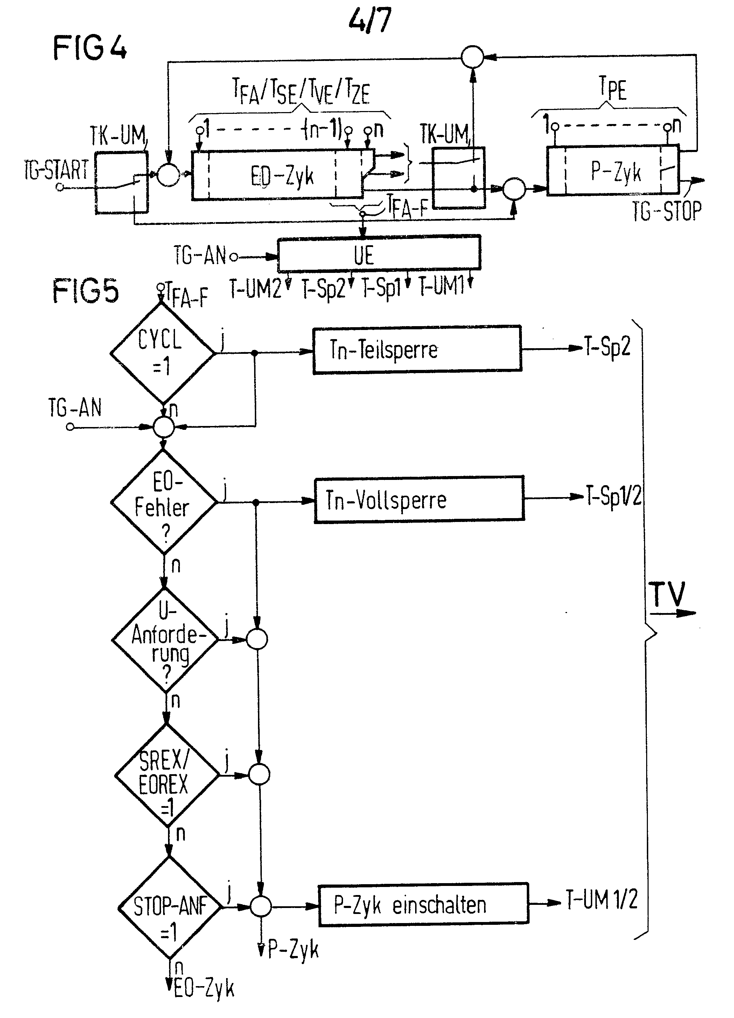

Bevor auf die Arbeitsweise der Prüfeinrichtung PE näher eingegangen werden soll, sei zunächst anhand von Fig. 4 der schematische Ablauf der gesamten Anordnung nach Fig. 1 erläutert. Dazu sind ein Arbeitszyklus EO-Zyk für eine Elementaroperation und ein Prüfzyklus P-Zyk in Form von Zeitscheiben mit den Taktphasen 1 bis n der den Ablauf steuernden Ketten gezeigt. Der Arbeitszyklus wird normalerweise gestartet, wenn der Taktgenerator TG freigegeben ist, d.h. mit dem Signal TG-START, und am Ende des Arbeitszyklus wird bei ungestörtem Ablauf jeweils ein neuer Arbeitszyklus begonnen. Während der beiden letzten Taktphasen (n-1) und n eines jeden Arbeitszyklus wird mit dem Taktfenster $T_{FA-F}$ die Überwachungseinrichtung UE aktiviert, der prüft, ob zwischenzeitlich ein Fehler oder eine Unterbrechungsanforderung aufgetreten oder sonstwie eine Reaktion erforderlich ist. Diese Reaktionen bestehen darin, dass bei gesetztem Merker CYCL in Fig. 3 die Taktphase n für alle Ketten mit Ausnahme der Taktkette TK-ZE zu sperren ist – Signal T-Sp2- oder dass bei einem EO-Fehler die Taktphase n aller Taktketten zu sperren – Signal T-Sp1/2- und auf einen Prüfzyklus umzuschalten ist – Signal T-UM1. Dies ist in Fig. 4 durch die nur zum Teil ausgebildete Zeitscheibe für die Taktphase n des Zyklus EO-Zyk und den Umschalter 'der Taktkettenumschaltung TK-UM angedeutet, die die den Prüfzyklus steuernde Taktkette TK-PE wirksam schaltet. Am Ende des Prüfzyklus P-Zyk wird dann entweder wieder auf einen Arbeitszyklus EO-Zyk umgeschaltet oder aber der Taktgenerator TG gestoppt, was mit dem Signal TG-STOP angedeutet ist.

Damit nicht nach jedem Generatorstopp sofort ein Arbeitszyklus beim Wiederstarten des Taktgenerators TG eingeleitet wird, sondern gegebenenfalls ein Prüfzyklus vorgeschaltet werden kann, ist auch das Startsignal TG-START über einen Umschalter der Taktkettenumschaltung TK-UM geführt. Die Umsteuerung auf einen vorgeschalteten Prüfzyklus P-Zyk erfolgt in diesem Fall durch das Signal T-UM2 der Überwachungseinrichtung UE, die unabhängig vom Takt $T_{FA-F}$ auch beim Vorliegen des Signals TG-AN eine Prüfung vornimmt.

Die Prüflogik der Überwachungseinrichtung UE ist in Fig. 5 aufgezeigt. Insgesamt sind fünf Zustandskategorien zu überprüfen, was im linken Teil der Fig. durch die fünf Entscheidungsrauten angedeutet ist:

a) Ist der Merker CYCL für zyklische Wiederholung der laufenden Elementaroperation gesetzt?

Wenn ja, ist die Teilsperre der Taktphasen n durchzuführen, was über das Signal T-Sp2 gesteuert wird.

b) Liegt ein EO-Fehler vor?

Wenn ja, muss die laufende Elementaroperation wiederholt werden. Dazu dürfen die vorliegenden Eingangsgrössen der laufenden Elementaroperationen nicht durch die Ergebnistakte verändert werden. Die Taktphase n ist daher für alle Taktketten zu sperren, was über das Signal T-Sp1/2 gesteuert wird. Ausserdem ist auf einen Prüfzyklus umzuschalten, was zum Signal T-UM1 führt.

c) Liegt eine sonstige Unterbrechungsanforderung vor?

d) Sind die Merker SREX oder EOREX gesetzt, weil es sich um eine Wiederholung der Elementaroperation oder eines Speicherzugriffs handelt?

e) Liegt eine Stoppanforderung vor und ist demzufolge der Merker STOP-ANF gesetzt?

In den drei zuletzt genannten Entscheidungsfällen erfolgt lediglich eine Umschaltung auf den Prüfzyklus mit dem Signal T-UM1 bzw. T-UM2.

Diese Entscheidungslogik der Überwachungseinrichtung UE kann in herkömmlicher Weise mit UND- und ODER-Gliedern, wie Fig. 3 zeigt, verwirklicht werden.

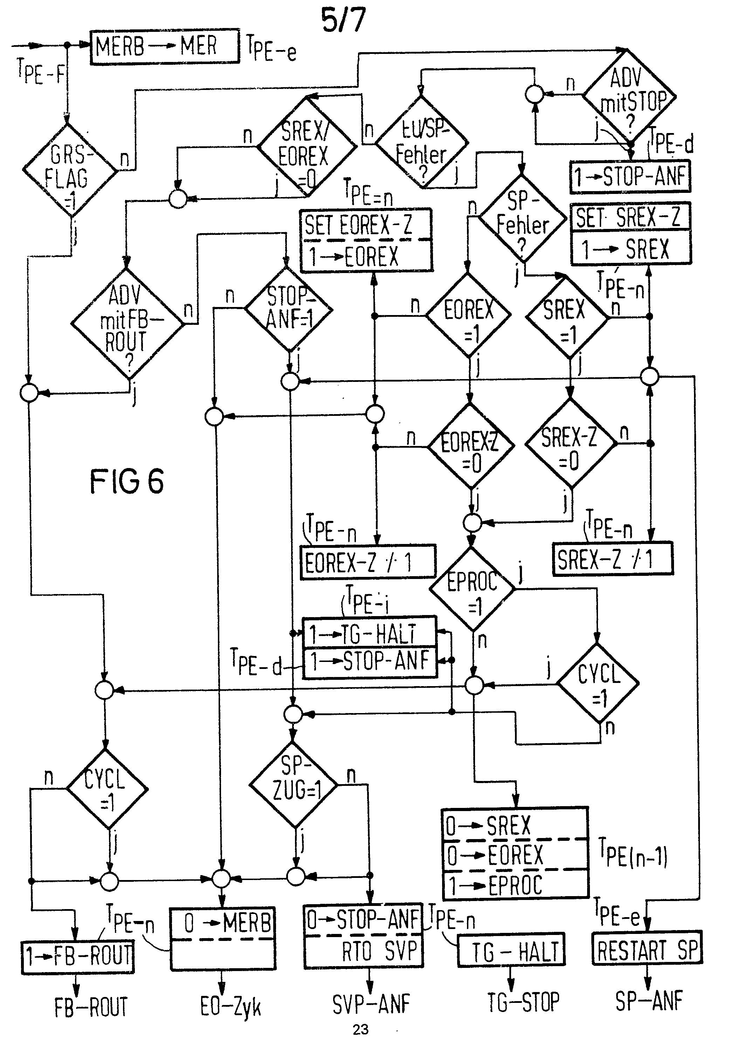

Fig. 6 zeigt, ebenfalls in Form eines Flussdiagramms, die Entscheidungslogik für das Verknüpfungsnetzwerk PE-LOG der Prüfeinrichtung PE während eines Prüfzyklus. Die Prüfung aller Entscheidungsrauten erfolgt mit einem statischen Signal $T_{PE-F}$, das, wie Fig. 2 zeigt, gleich dem Auswahlsignal für die Taktkette TK-PE ist. In dieses Signal sind die einzelnen Taktphasen der Taktkette TK-PE eingebettet, die die einzelnen, durch umrahmende Kästchen gekennzeichneten Reaktionen auslösen. Die Lage im Ablaufdiagramm nach Fig. 6 sagt daher über die Reaktionszeit während des Prüfzyklus nichts aus, sondern massgebend sind allein die neben den Kästchen angegebenen Taktphasen des Prüfzyklusses, während die Form der Darstellung mehr aus Gründen der Übersichtlichkeit gewählt wurde.

Nach Reaktionszeiten geordnet, wird als erstes mit der Taktphase d der Merker STOP-ANF gesetzt, und als zweites folgt mit der Phase e der Übertrag vom Pufferregister MERB in das Maschinenfehlerregister MER sowie mit dem Signal SP-ANF die Wiederholung eines Speicherzugriffs.

Mit der Taktphase i wird der Merker TG-HALT gesetzt und mit der Taktphase (n-1) werden die Merker SREX und EOREX gelöscht, während der Merker EPROC gesetzt wird. Erst mit der Ergebnistaktphase n werden zum Abschluss des Prüfzyklusses die übrigen Ergebnisse der Prüfung, also die Überleitung in die Fehlerbehandlungsroutine FB-ROUT, die Umschaltung auf den Arbeitszyklus mit gleichzeitigem Rücksetzen des Pufferregisters MERB, die Anforderung SVP-ANF für den Service-Prozessor SVP bei gleichzeitigem Löschen der Stoppanforderung oder das Signal TG-STOP für den Generatorstopp wirksam, und es werden die Zählerstände der Zähler SREX-Z und EOREX-Z verändert, sowie die zugehörigen Merker SREX bzw. EOREX gesetzt.

Die Aufteilung auch den Prüfzyklus in einzelne Taktphasen garantiert also einen zeitgerechten Ablauf der Reaktionen während des Prüfzyklus.

Abgesehen von der ersten Prüfung, nämlich ob der Merker GRS-FLAG gesetzt ist, weil die Maschine zurückgesetzt worden war, und demzufolge zunächst ein Einsprung in die Fehlerbehandlungsroutine erforderlich ist, bevor in den normalen Arbeitsablauf übergeleitet werden kann, kommt den Speicherfehlern die höchste Priorität zu, weil für einen Speicherzugriff im Vergleich zur Dauer eines Arbeitszyklus wesentlich mehr Zeit erforderlich ist und ein Aufschub unnötige Verzugszeiten mit sich bringt. Die nächstniedrige Priorität ist einem EO-Fehler zugeordnet, da eine Fortführung des Normalablaufs nur dann sinnvoll ist, wenn eine Elementaroperation ordnungsgemäss und fehlerfrei ausgeführt worden ist.

Es wird daher zunächst allgemein geprüft, ob ein Speicher- oder EO-Fehler vorliegt. Ist dies der Fall, wird geprüft, ob es ein Speicherfehler ist. In beiden Fällen erfolgt dann eine Überprüfung der zugehörigen Merker SREX oder EOREX mit der Folge, dass entweder der zugehörige Merker und der zugehörige Zähler SREX-Z bzw. EOREX-Z gesetzt wird, um die Anzahl der Wiederholungen überwachen zu können, oder dass der zugehörige Zähler SREX-Z bzw. EOREX-Z überprüft wird, ob die Anzahl der zulässigen Wiederholungen – Zählerstand z.B. = O bei entsprechender Voreinstellung – überschritten ist. Ist eine weitere Wiederholung zulässig, wird der Zählerstand um 1 verringert und die Wiederholung mit der Reaktion RESTART-PS und einer entsprechenden Anforderung SP-ANF an den Speicher bzw. mit einer Rückschaltung auf den Arbeitszyklus am Ende des Prüfzyklus eingeleitet.

Ist eine Wiederholung nicht mehr möglich, so wird geprüft, ob es sich um einen Fehler während einer Fehlerbehandlungsprozedur und damit um einen Doppelfehler handelt. Ist der Merker EPROC nicht gesetzt und liegt daher kein Doppelfehler vor, so werden die Merker SREX und EOREX gelöscht und der Merker EPROC gesetzt. Ausserdem wird mit Signal FB-ROUT am Ende des Prüfzyklus in an sich bekannter Weise eine Fehlerbehandlungsroutine eingeleitet. Voraussetzung dafür ist jedoch, dass sich die Maschine nicht im zyklisch arbeitenden Zustand befindet, also der Merker CYCL nicht gesetzt ist. Weiterhin wird auf den nächsten Arbeitszyklus umgeschaltet.

Für den Fall eines Doppelfehlers werden, wenn kein zyklischer Betriebszustand gegeben ist, zunächst die Merker STOP-ANF und TG-HALT gesetzt. Ist des weiteren der Merker SP-ZUG nicht gesetzt, weil zur Zeit kein Speicherzugriff erfolgt, so wird der Merker STOP-ANF am Ende des Prüfzyklus wieder gelöscht und der Service-Prozessor SVP mit dem Signal SVP-ANF angefordert. Ist dagegen der Merker SP-ZUG gesetzt, so unterbleibt die Löschung der Stoppanforderung und es wird der Service-Prozessor nicht angefordert. In beiden Fällen wird jedoch wegen des zuvor gesetzten Merkers TG-HALT der Taktgenerator am Ende des Prüfzyklus mit dem Signal TG-STOP angehalten, bis der Taktgenerator TG durch den Serviceprozessor SVP bzw. das Speichersystem SPS wieder gestartet wird (Fig. 2).

Liegt weder ein Speicher- noch ein EO-Fehler vor, so wird geprüft, ob die Merker SREX und EOREX gelöscht sind. Sind diese Merker gesetzt, so werden sie gelöscht, da entweder eine vorgenommene Wiederholung erfolgreich verlaufen ist oder aber es gilt, nach einem Wiederstart des Taktgenerators einen definierten Ausgangszustand zu schaffen.

Abschliessend wird geprüft, ob ein Adressenvergleich mit Einsprung in die Fehlerbehandlungsroutine FB-ROUT als Reaktionsmodus vorliegt oder nicht. Wenn ja ergibt sich die gleiche Reaktion wie bei gesetztem GRS-FLAG. Im anderen Falle wird mit niedrigster Priorität geprüft, ob eine Stoppanforderung vorliegt und daher der Merker STOP-ANF gesetzt ist. Liegt eine Stoppanforderung vor, wird der Merker TOG-HALT gesetzt und abhängig beim Vorliegen eines Speicherzugriffs, wie bereits erläutert, der Taktgenerator mit oder ohne gleichzeitiger Anforderung für den Serviceprozessor SVP angehalten.

Während eines Speicherzugriffs können also weitere Elementaroperationen abgearbeitet und im Fehlerfall auch wiederholt werden, es sei denn, es würden dazu erst durch den Speicherzugriff bereitzustellende Daten benötigt. Sobald jedoch ein Speicherfehler auftritt, wird die Parallelarbeit beendet, um bei der Fehlerbehandlung gegebenenfalls auftretende unüberwindbare Schwierigkeiten zu vermeiden. Speicherzugriffswiederholungen laufen daher allein ab, und die Verarbeitung von Elementaroperationen wird erst nach erfolgreichem Speicherzugriff wieder aufgenommen. Zu diesem Zweck ist mit der Wiederholungsanforderung für den Speicher ein Setzen des Merkers TG-HALT wie beim Vorliegen einer Stoppanforderung verbunden.

Bleibt noch der Adressenvergleich mit Stoppreaktion, der die gleiche Priorität wie eine Stoppanforderung aufweist. Wenn dennoch die Prüfung dafür beim gewählten Ausführungsbeispiel vor der Prüfung auf das Vorliegen eines Speicheroder EO-Fehlers vorgesehen ist, so soll dadurch das rechtzeitige Setzen des Merkers STOP-ANF gesichert werden. In jedem Falle bleibt das Einleiten des Stoppzustandes die letzte Tätigkeit der Prüfeinrichtung PE, die zum Tragen kommt, wenn alle übrigen Anforderungen abgearbeitet sind.

Am Ende eines jeden Prüfzyklus wird auf jeden Fall auf den Arbeitszyklus zurückgeschaltet. Ob dieser jedoch sofort oder aber erst später eingeleitet wird, ist davon abhängig, ob zusammen damit das Signal TG-STOP wirksam wird oder nicht.

Die Realisierung des Verknüpfungsnetzwerkes PE-LOG kann wiederum mit herkömmlichen UND- und ODER-Gliedern in einfacher Weise vorgenommen werden.

Zum Abschluss soll anhand einiger Beispiele der Ablauf der einzelnen Zyklen bei unterschiedlichen Unterbrechungsanforderungen aufgezeigt werden.

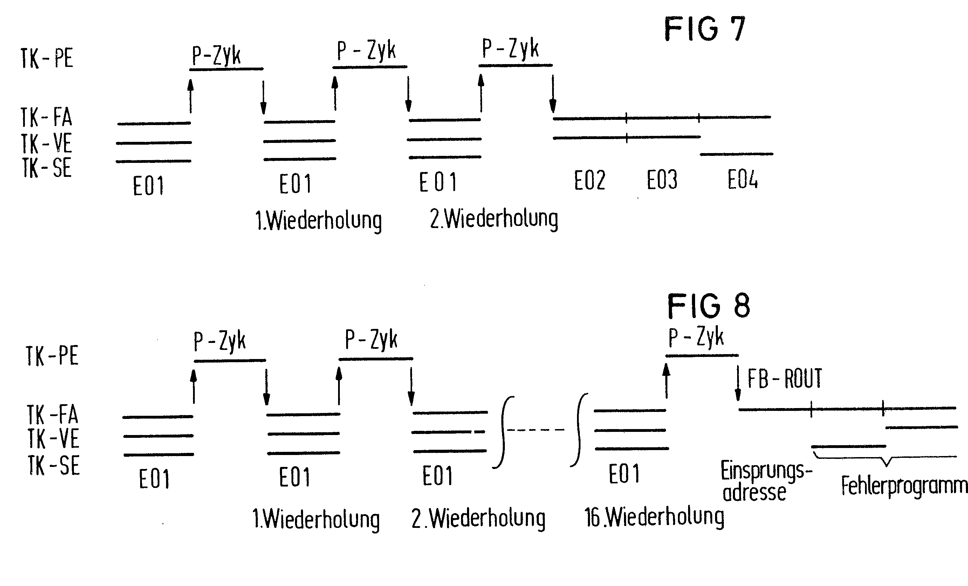

Fig. 7 zeigt den Ablauf bei Auftreten eines EO-Fehlers während eines Arbeitszyklus für die Elementaroperation EO1, bei dem die Taktketten TK-FA, TK-VE und TK-SE parallel ablaufen, d.h. neben der Durchführung einer Folgeadressrechnung für die nächste auszuführende Elementaroperation EO2 arbeiten die Verarbeitungseinheit VE und die Steuereinheit SE parallel. Wegen des aufgetretenen EO-Fehlers wird am Ende des Arbeitszyklus für die Elementaroperation EO1 auf einen Prüfzyklus umgeschaltet und der EO-Fehler als solcher erkannt. Die Folge ist eine Wiederholung der Elementaroperation EO1 und die Durchführung eines weiteren Prüfzyklus. Da der Fehler nochmals auftritt, erfolgt eine weitere Wiederholung und ein weiterer Prüfzyklus. Da hierbei kein Fehler mehr festgestellt wird, kann darauf geschlossen werden, dass die Elementaroperation EO1 erfolgreich abgeschlossen ist. Es wird daher der Arbeitszyklus für die Elementaroperation EO2, und da diese ebenfalls fehlerfrei ausgeführt wird, der Arbeitszyklus für die Elementaroperation EO3 eingeleitet, ohne dass eine weitere Unterbrechung durch einen Prüfzyklus erfolgt. Bei fehlerfreiem Arbeiten der Maschine erfolgt also keine Unterbrechung des Normalablaufs durch einen Prüfzyklus.

Bei dem Ablaufdiagramm nach Fig. 8 führt, ausgehend von dem Beispiel nach Fig. 7, die Wiederholung der fehlerbehafteten Elementaroperation EO1 nicht zum Ziel. Insgesamt wird 16 mal wiederholt. Danach führt der Prüfzyklus zum Einsprung in die Fehlerbehandlungsroutine mit der Folge, dass zunächst nur die Taktkette TK-FA abläuft, um die Startadresse für die Fehlerbehandlungsroutine zu berechnen, mit der dann das Fehlerprogramm gestartet wird, das in den nachfolgenden Arbeitszyklen die Steuereinheit SE und die Verarbeitungseinheit VE tätig werden lässt.

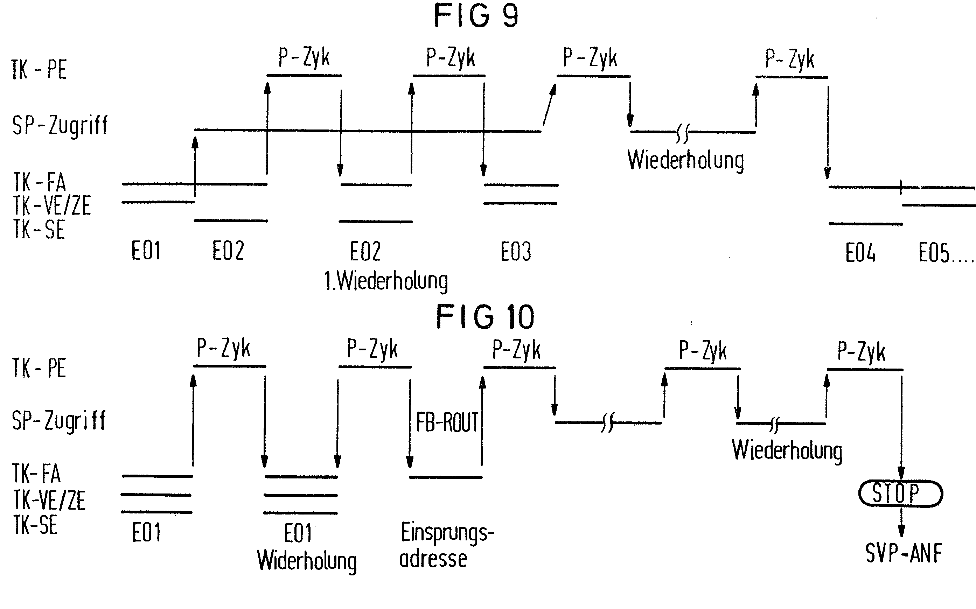

Fig. 9 verdeutlicht den Speicherzugriff parallel zu der Ausführung von Elementaroperationen. Während des Arbeitszyklusses für die Elementaroperation EO1 startet die Zugriffseinheit ZE einen Zugriff zum Speichersystem. Während dieses Zugriffs werden unabhängig davon anstehende Elementaroperationen abgearbeitet. Der Arbeitszyklus für die Elementaroperation EO2 verläuft nicht fehlerfrei, so dass ein Prüfzyklus eingeschoben und die Elementaroperation EO2 wiederholt wird. Da die Wiederholung erfolgreich ist, leitet der anschliessende Prüfzyklus auf den Arbeitszyklus für die Elementaroperation EO3 über. Während dieses Arbeitszyklus wird ein Speicherfehler gemeldet. Der dadurch eingeleitete Prüfzyklus startet den Speicherzugriff erneut und stoppt die Verarbeitung weiterer Elementaroperationen, bis der Speicher die erfolgreiche Beendigung des Zugriffs meldet und den gestoppten Taktgenerator in Fig. 2 wieder startet. Aufgrund des gesetzten Merkers SREX wird mit dem Generatorstart unmittelbar auf einen Prüfzyklus umgeschaltet. Da die Speicherzugriffswiederholung jedoch erfolgreich war und keine weitere Unterbrechungsanforderung vorliegt, wird der normale Arbeitsablauf mit Ausführung der Elementaroperationen EO4 und EO5 usw. wieder fortgesetzt.

Fig. 10 verdeutlicht schliesslich die Überlagerung mehrerer Unterbrechungsanforderungen mit verschiedener Priorität. Dabei sei angenommen, dass während eines Arbeitszyklus folgende Fehler auftreten:

a) Ein EO-Fehler,

b) ein Adressenvergleich mit Einsprung in die Fehlerbehandlungsroutine und

c) eine Stoppanforderung durch den Serviceprozessor SVP.

Des weiteren ergibt sich während der Berechnung der Startadresse für die Fehlerbehandlungsroutine eine Speicheranforderung mit anschliessendem Speicherfehler.

Nach Ablauf des ersten Arbeitszyklus mit seinen drei Unterbrechungsanforderungen wird zunächst ein Prüfzyklus ausgeführt. Da der EO-Fehler von den vorliegenden Anforderungen, wie bereits erläutert, die höchste Priorität aufweist, wird die Elementaroperation zunächst wiederholt. Die anderen Anforderungen gehen dadurch nicht verloren, da der Adressenvergleich an die auszuführende Elementaroperation gebunden ist und somit bei der Wiederholung wiederkehrt und da ausserdem der Merker STOP-ANF gesetzt bleibt. Im nachfolgenden Prüfzyklus wird die Wiederholung der Elementaroperation als erfolgreich erkannt, der Adressenvergleich mit Einsprung in die Fehlerbehandlungsroutine tritt erneut auf und kann nun berücksichtigt werden. Im nachfolgenden Arbeitszyklus für die Berechnung der Einsprungsadresse für die Fehlerbehandlungsroutine tritt eine Speicheranforderung auf. Da der Merker STOP-ANF noch immer gesetzt ist, erfolgt erneut eine Umsteuerung auf einen Prüfzyklus mit dem Erfolg, dass wegen des Speicherzugriffs zunächst nur der Taktgenerator angehalten wird, während die Anforderung an den Serviceprozessor SVP zunächst unterbleibt. Ein während des laufenden Speicherzugriffs auftretender Fehler führt zu einem weiteren Prüfzyklus mit einer Wiedeholung des Speicherzugriffs, der nun erfolgreich verläuft. Der Taktgenerator wird daraufhin vom Speicher wieder gestartet, was wegen des gesetzten Merkers SREX zu einem unmittelbar anschliessenden weiteren Prüfzyklus führt. Hierbei kommt nun schliesslich die Stoppanforderung des Serviceprozessors SVP zum Tragen. Der Merker STOP-ANF wird gelöscht, der Taktgenerator erneut gestoppt und die Anforderung an den Serviceprozessor SVP wirksam.

Insgesamt führt die Anwendung des neuen Verfahrens gemäss der Erfindung zu einer sehr leistungsfähigen Datenverarbeitungseinrichtung, bei der Fehler und Unterbrechungsanforderungen bereits auf der Ebene der Elementaroperationen erfasst und zum Teil auch behandelt werden. Alle Entscheidungen über die Behandlung von Fehlern und Unterbrechungsanforderungen sind in der gesonderten Prüfeinrichtung zusammengefasst, die in einfacher Weise realisierbar ist und den verschiedensten Rand- und Systembedingungen angepasst werden kann. Die in Fig. 6 aufgezeigte Entscheidungslogik stellt daher nur ein Ausführungsbeispiel dar, um die prinzipielle Arbeitsweise der Prüfeinrichtung verständlich zu machen. So können z.B. ohne weiteres weitere Ablaufzustände berücksichtigt werden, oder es kann beim Speicherzugriff zwischen Zugriffen für Daten, die die Verarbeitungseinrichtung VE benötigen, und für Mikrobefehle, um den Steuerspeicher der Steuereinrichtung SE zu laden, unterschieden werden.

**Patentansprüche**

1. Verfahren zur Behandlung von Unterbrechungsbedingungen während des Arbeitsablaufes in Datenverarbeitungsanlagen mit Speichersteuerung (ZE) und Mikroprogrammsteuerung (SE), die von einem zentralen Taktgenerator (TG) abhängig ist, der für die Ausführung einer Elementaroperation (EO) pro Arbeitszyklus (EO-Zyk) der Mikroprogrammsteuerung mittels einer Taktkette mehrere Taktsignale erzeugt und beim Auftreten einer Unterbrechungsbedingung durch eine Überwachungseinrichtung (UE) in Verbindung mit einer Prüfeinrichtung (PE) am Ende des laufenden Arbeitszyklus (EO-Zyk) unterbrechbar ist, dadurch gekennzeichnet, dass die Überwachungseinrichtung (UE) kontinuierlich alle möglichen Unterbrechungsbedingungen sammelt und selbst gegen Ende eines jeden Arbeitszyklusses auf das Vorliegen von Unterbrechungsbedingungen überprüft wird, dass bei Feststellung einer solchen Unterbrechungsbedingung der Taktgenerator (TG) von der Taktkette für den Arbeitszyklus (EO-Zyk) jeweils vorübergehend auf eine Prüfzyklustaktkette (TK-PE) zur Erzeugung eines den Normalablauf unterbrechenden gesonderten Prüfzyklus (P-Zyk) umgeschaltet wird, deren Taktsignale ($T_{PE}$ . . .) die mit der Überwachungseinrichtung (UE) gekoppelte Prüfeinrichtung (PE) steuern, und dass die Prüfeinrichtung (PE) während des Prüf-Zyklus (P-Zyk) abhängig von der Art der Unterbrechungsbedingung entscheidet, welche Massnahme nachfolgend einzuleiten ist.

2. Verfahren nach Anspruch 1, dadurch gekennzeichnet, dass die Unterbrechungsbedingungen zunächst in einem Pufferregister (MERB) gesammelt und zwischengespeichert werden, das zusammen mit weiteren Merkern (z.B. CYCL, SREX, EOREX, STOP-ANF) zur Steuerung der Prüfeinrichtung (PE) am Ende eines jeden Arbeitszyklus (EO-Zyk) durch einen von den letzten (z.B. den beiden letzten (n-1) und n) Taktphasen des Arbeitszyklus gebildeten Fenstertakt ($T_{FA-F}$) überprüft wird, und dass die im Pufferregister (MERB) zwischengespeicherten Unterbrechungsbedingungen zu Beginn eines eingeleiteten Prüfzyklus (P-Zyk) in ein Maschinenfehlerregister (MER) übertragen und am Ende des Prüfzyklus im Pufferregister (MERB) gelöscht werden.

3. Verfahren nach einem der Ansprüche 1 bis 2, dadurch gekennzeichnet, dass eine Überprüfung auf das Vorliegen einer Unterbrechungsbedingung auch beim Wiederstart des Taktgenerators (TG) nach einem Generatorstop erfolgt (mit TG--AN) und ein Prüfzyklus (P-Zyk) gegebenenfalls unmittelbar nach dem Wiederstart des Taktgenerators (TG) eingeleitet wird.

4. Verfahren nach einem der Ansprüche 1 bis 3, dadurch gekennzeichnet, dass zur Entscheidung über die nachfolgend einzuleitenden Massnahmen die Prüfeinrichtung (PE) bei mehreren gleichzeitig auftretenden Ereignissen diese nach Prioritäten geordnet überprüft, dass in einem Prüfzyklus (P-Zyk) nicht erfasste Ereignisse gegebenenfalls in Merkern (z.B. STOP-ANF) zwischengespeichert und in nachfolgenden Prüf-Zyklen behandelt werden, wobei nach jedem Prüfzyklus (P-Zyk) zunächst auf einen Arbeitszyklus (EO-Zyk) für die Mikroprogrammsteuerung zurückgeschaltet wird, unabhängig davon, ob der Arbeitszyklus unmittelbar anschliessend ausgeführt wird oder nicht.

5. Verfahren nach einem der Ansprüche 1 bis 4, dadurch gekennzeichnet, dass die Rückschaltung auf den Arbeitszyklus (EO-Zyk) jeweils am Ende eines Prüfzyklus (P-Zyk) zwangsläufig durch den letzten Takt ($T_{PE-n}$) des Prüfzyklus erfolgt.

6. Verfahren nach einem der Ansprüche 1 bis 5, dadurch gekennzeichnet, dass Elementaroperationen (EO) und Speicherzugriffe im Fehlerfall wiederholt werden, dass die Anzahl der erfolgten Wiederholungen überwacht wird (mit SREX-Z bzw. EOREX) und dass mit Überschreiten einer vorgegebenen Anzahl (z.B. 16) von Wiederholungen ohne Erfolg in eine Fehlerbehandlungsroutine (FB-ROUT) übergeleitet wird, während bei erfolgreicher Wiederholung die Arbeit der Mikroprogrammsteuerung fortgesetzt wird.

7. Verfahren nach Anspruch 6, dadurch gekennzeichnet, dass bei einer Wiederholung ein Merker (SREX bzw. EOREX) gesetzt wird, der nach erfolgreicher Wiederholung eine erneute Umschaltung auf einen Prüfzyklus (P-Zyk) zur Kontrolle veranlasst, bevor die Arbeit der Mikroprogrammsteuerung fortgesetzt wird.

8. Verfahren nach Anspruch 6 oder 7, dadurch gekennzeichnet, dass bei Auftreten eines erneuten Fehlers während einer Fehlerbehandlungsroutine nach erfolgloser Wiederholung (EPROC gesetzt) die Anlage in den Stoppzustand übergeht.

9. Verfahren nach einem der Ansprüche 6 bis 8, dadurch gekennzeichnet, dass bei einer fehlerhaften Ausführung einer Elementaroperation (EO) der die Ergebnisse dieser Operation liefernde letzte Takt (n) des laufenden Arbeitszyklusses (EO-Zyk) gesperrt wird, so dass die bei Einleitung der Elementaroperation (EO) vorliegenden Eingangsgrössen unverändert für Wiederholungen der Elementaroperation erhalten bleiben.

10. Verfahren nach einem der Ansprüche 6 bis 9, dadurch gekennzeichnet, dass während eines Speicherzugriffs die Ausführung von Elementaroperationen (EO) der Mikroprogrammsteuerung, soweit möglich, fortgesetzt wird und fehlerhaft ausgeführte Elementaroperationen auch wiederholt werden, dass aber bei einem Speicherfehler die Ausführung von Elementaroperationen gestoppt wird, bis die dann eingeleitete Wiederholung des Speicherzugriffs zum Erfolg geführt hat.

11. Verfahren nach einem der Ansprüche 1 bis 10, dadurch gekennzeichnet, dass bei einer Stoppanforderung zunächst ein Merker (STOP-ANF) gesetzt wird und dass die Einleitung des Stoppzustandes erst erfolgt, wenn alle übrigen Unterbrechungsbedingungen von der Prüfeinrichtung (PE) behandelt sind.

12. Verfahren nach einem der Ansprüche 1 bis 11, dadurch gekennzeichnet, dass bei zyklischer Wiederholung (CYCL gesetzt) derselben Elementaroperation (EO) – abgesehen von einer Speicherzugriffswiederholung – lediglich eine auftretende Stoppanforderung (STOP-ANF gesetzt) zur Unterbrechung der zyklischen Wiederholung führt.

13. Verfahren nach einem der Ansprüche 1 bis 12 für Datenverarbeitungsanlagen mit von einer gemeinsamen Mikroprogrammsteuerung abhängigen, im übrigen aber selbständig und teilweise parallel arbeitenden Einheiten (z.B. Steuereinheit SE, Verarbeitungseinheit VE und Speicherzugriffseinheit ZE) und mit getrennten Taktketten (z.B. TK-SE, TK-VE, TK-ZE und TK-FA) zur Steuerung des Arbeitsablaufs dieser Einheiten, dadurch gekennzeichnet, dass während eines Prüfzyklus (P-Zyk) alle übrigen Taktketten mit Ausnahme der Prüfzyklus-Taktkette (TK-PE) für die Prüfeinrichtung (PE) gesperrt werden, dass bei einer fehlerhaften Ausführung einer Elementaroperation (EO) die Ergebnistakte (z.B. $T_{FA-n}$ und $T_{SE-n}$) aller während dieses Arbeitszyklus (EO-Zyk) laufenden Taktketten (z.B. TK-FA und TK-SE) gesperrt werden, und dass bei zyklischer Widerholung (CYCL gesetzt) derselben Elementaroperation (EO) bei fehlerfreier Ausführung derselben lediglich der Ergebnistakt ($T_{ZE-n}$) für die Speicherzugriffseinheit (ZE) nicht gesperrt wird, so dass die Einleitung von Speicherzugriffen weiterhin möglich ist.

14. Anordnung zur Durchführung des Verfahrens nach einem der Ansprüche 1 bis 13, dadurch gekennzeichnet, dass die Taktversorgung (TV) wenigstens zwei getrennte Taktketten zur Ableitung von einen Arbeitszyklus (EO-Zyk) und einen Prüfzyklus (P-Zyk) bildenden Taktsignalen und eine Taktkettenumschaltung (TK-UM) sowie Einrichtungen zur Sperrung der Ergebnistaktsignale für den Arbeitszyklus (EO-Zyk) und zur Erzeugung eines Prüftaktes (z.B. $T_{FA-F}$) für die Überwachungseinrichtung aufweist, dass die Überwachungseinrichtung (UE) aus einer Reihe von logischen Verknüpfungsgliedern (UND, ODER) zur Erzeugung der Sperrsignale (T-Sp 1/2) für die Ergebnistaktsignale und eines Umschaltsignales (T-UM1) für die Einleitung eines Prüfzyklusses (P-Zyk) in Abhängigkeit von den vorliegenden Unterbrechungsbedingungen und dem Prüftakt ($T_{FA-F}$) der Taktversorgung (TV) besteht, und dass die Prüfeinrichtung (PE) aus einer Vielzahl von die einzelnen Unterbrechungsbedingungen anzeigenden und als Merker für den Steuerungsablauf dienenden Speicherelementen (MERB, CYCL, STOP-ANF, SREX, EPROC, TG-Halt, SP-ZUG) und zwei Zählern (SREX-Z und EOREX-Z) zur Kennzeichnung der Anzahl von Wiederholungen sowie einem logischen Verknüpfungsnetzwerk (PE-LOG) besteht, das abhängig von den Informationsinhalten der Speicherelemente und der Zähler in Verbindung mit den Taktsignalen ($T_{PE-}$ ..) des Prüfzyklus (P-Zyk) den Fortgang des Arbeitsablaufs bestimmt.

15. Anordnung nach Anspruch 14, dadurch gekennzeichnet, dass der Taktgenerator (TG) der Taktversorgung (TV) Einrichtungen zur Ableitung eines weiteren Prüfsignals (TG-AN) für die Überwachungseinrichtung (UE) beim Wiederstart des Taktgenerators (TG) nach einem Generatorstop aufweist.

## Revendications

1. Procédé pour le traitement de conditions d'interruption pendant le déroulement d'opérations dans des installations pour le traitement de données avec une commande par mémoire (ZE) et commande par microprogramme (SE), qui dépendent d'un générateur de cadence central (TG) qui produit, pour l'exécution d'une opération élémentaire (EO) par cycle de travail (EO-Zyk) de la commande par programme, à l'aide d'une chaîne de cadences, plusieurs signaux de cadence, et est, à l'apparition d'une condition d'interruption, susceptible d'être interrompu, à la fin du cycle de travail en cours (EO-Zyk) par un dispositif de surveillance (UE) en liaison avec un dispositif de contrôle (PE), caractérisé par le fait que le dispositif de surveillance (UE) collecte de façon continue toutes les conditions d'interruption possibles, et est lui-même contrôlé vers la fin de chaque cycle de travail pour déterminer la présence de conditions d'interruption, que lors de la constatation de la présence d'une telle condition d'interruption, le générateur de cadence (TG) est commuté de la chaîne de cadence pour le cycle de travail (EO-Zyk) passagèrement sur une chaîne de cadence de cycle de contrôle (TA-TE) pour produire un cycle de contrôle particulier (P-Zyk) qui interrompt le déroulement normal et dont les signaux de cadence ($T_{PE}$...) commandent le dispositif de contrôle (PE) couplé au dispositif de surveillance (UE), et que le dispositif de contrôle (PE) décide pendant le cycle de contrôle (P-Zyk) et en fonction du genre de la condition d'interruption, des mesures qui sont ensuite à prendre.

2. Procédé selon la revendication 1, caractérisé par le fait que les conditions d'interruption sont d'abord collectées dans un registre-tampon (MERB) et sont mémorisées temporairement, lequel registre-tampon est contrôlé, avec d'autres indicateurs (par exemple CYCL, SREX, EOREX, STOP-ANF) servant à la commande du dispositif de contrôle (PE), à la fin de chaque cycle de travail (EO-Zyk) par une cadence de fenêtre ($T_{FA-F}$) formée par l'une des dernières (par exemple par les deux dernières n-1) et n) phases de cadence du cycle de travail, et que les conditions d'interruption mémorisées temporairement dans le registre-tampon (MERB) sont transférées au début d'un cycle de contrôle (P-Zyk) qui est initié, dans un registre d'erreurs de machine (MER), et sont effacées à la fin du cycle de contrôle dans le registre-tampon (MERB).

3. Procédé selon l'une des revendications 1 à 2, caractérisé par le fait qu'un contrôle pour la présence d'une condition d'interruption a également lieu au redémarrage du générateur de cadence (TG) après un arrêt du générateur (avec TG-AN) et qu'éventuellement un cycle de contrôle (P-Zyk) est initié directement après le redémarrage du générateur de cadence (TG).

4. Procédé selon l'une des revendications 1 à 3, caractérisé par le fait que dans le cas de l'apparition simultanée d'événements, le dispositif de contrôle (PE) les contrôle de façon ordonnée du point de vue de leur priorité pour décider des mesures qui sont ensuite à prendre, que des événements qui ne sont pas saisis dans un cycle de contrôle (P-Zyk) sont éventuellement mémorisés temporairement dans des indicateurs (par exemple STOP-ANF) et sont traités dans des cycles de contrôle suivants, la réalisation étant telle qu'après chaque cycle de contrôle (P-Zyk) on commute d'abord en arrière sur un cycle de travail (EO-Zyk) pour la commande par microprogrammes, indépendamment du fait que le cycle de travail est ensuite directement exécuté ou non.

5. Procédé selon l'une des revendications 1 à 4, caractérisé par le fait que la commutation en arrière sur le cycle de travail (EO-Zyk) a lieu à la fin d'un cycle de contrôle (P-Zyk) obligatoirement par la dernière cadence ($T_{PE-n}$) du cycle de contrôle.

6. Procédé selon l'une des revendications 1 à 5, caractérisé par le fait que des opérations élémentaires (EO) et des accès à la mémoire sont répétés dans le cas d'une erreur, que le nombre des répétitions exécutées est contrôlé (avec SREX-Z ou EOREX), et qu'avec le dépassement d'un nombre prédéterminé (par exemple 16) de répétitions effectuées sans succès, on passe è une routine de traitement d'erreurs (FB-ROUT), alors que lors d'une répétition couronnée de succès, l'opération de la commande par microprogrammes est poursuivie.

7. Procédé selon la revendication 6, caractérisé par le fait que lors d'une répétition un indicateur (SREX ou EOREX) est activé, lequel indicateur provoque, après une répétition couronnée de succès, une nouvelle commutation sur un cycle de contrôle (P-Zyk) pour le contrôle, avant que soit poursuivi le travail de la commande par microprogrammes.

8. Procédés selon la revendication 6, ou 7, caractérisé par le fait qu'à l'apparition d'une nouvelle erreur pendant une routine de traitement d'erreur, l'installation passe à l'état d'arrêt après une répétition (EPROC activé) qui n'est couronnée de succès.

9. Procédé selon l'une des revendications 6 à 8, caractérisé par le fait que lors d'une exécution défectueuse d'une opération élémentaire (EO), la dernière cadence (n) du cycle de travail (EO-Zyk) qui se déroule, et qui fournit les résultats de cette opération, est bloquée, en sorte que les grandeurs d'entrée qui sont présentes lors de l'initiation de l'opération élémentaire (EO), restent maintenues pour des répétitions de l'opération élémentaire.

10. Procédé selon l'une des revendications 6 à 9, caractérisé par le fait que pendant un accès à la mémoire, l'exécution d'opérations élémentaires (EO) de la commande par microprogrammes est poursuivie aussi loin que possible et des opérations élémentaires défectueuses exécutées, sont également répétées, alors que lors d'une erreur de mémoire, l'exécution d'opérations élémentaires est arrêtée jusqu'à ce que, lors de la répétition de l'accès à la mémoire, soit couronnée de succès.

11. Procédé selon l'une des revendications 1 à 10, caractérisé par le fait que lors d'une demande d'arrêt, d'abord un indicateur (STOP-ANF) est activé et que l'initiation de l'état d'arrêt n'a lieu que si toutes les autres conditions d'interruptions sont traitées par le dispositif de contrôle (PE).

12. Procédé selon l'une des revendications 1 à 11, caractérisé par le fait que lors d'une répétition cyclique (CYCL activé) de la même opération élémentaire (EO) – à l'exception d'une répétition de l'accès à la mémoire –, seule une demande d'arrêt qui apparaît (STOP-ANF activé) mène à l'interruption de la répétition cyclique.

13. Procédé selon l'une des revendications 1 à 12 pour des installations pour le traitement de données avec des unités (par exemple unité de commande SE, unité de traitement VE et unité d'accès à la mémoire ZE) qui dépendent d'une commande commune par microprogrammes mais opérant au demeurant de façon indépendante et, en partie en parallèle, et avec des chaînes de cadence distinctes (par exemple TK-SE, TK-VE, TK-ZE et TK-FA) pour la commande du déroulement du travail de ces unités, caractérisé par le fait que pendant un cycle de travail (P-Zyk) toutes les autres chaînes de cadence, à l'exception de la chaîne de cadence du cycle de contrôle (TK-PE), sont bloquées pour le dispositif de contrôle (PE) et que lors d'une réalisation défectueuse d'une opération élémentaire (EO) les cadences de résultats (par exemple $T_{FA-n}$ et $T_{SE-n}$) de toutes les chaînes de cadence (par exemple TK-FA et TK-SE) qui fonctionnent pendant ce cycle de travail (EO-Zyk), sont bloquées et que lors d'une répétition cyclique (CYCL activé) de la même opération élémentaire (EO) et lors d'une réalisation non défectueuse de celle-ci, seule la cadence du résultat ($T_{ZE-n}$) pour l'unité d'accès à la mémoire (ZE) n'est pas bloquée, en sorte qu'il est possible de continuer à opérer des accès à la mémoire.

14. Dispositif pour la mise en œuvre du procédé selon l'une des revendications 1 à 13, caractérisé par le fait que l'alimentation en cadences (TV) comporte au moins deux chaînes de cadences distinctes pour dériver des signaux de cadences qui forment un cycle de travail (EO-Zyk) et un cycle de contrôle (P-Zyk), et un commutateur de chaînes de cadences (TK-UM), de même que des dispositifs pour bloquer les signaux de cadences de résultats pour le cycle de travail (EO-Zyk) et pour produire une cadence de contrôle (par exemple $T_{FA-F}$) pour le dispositif de contrôle, que le dispositif de contrôle (UE) est constitué par une série de circuits combinatoires logiques (ET, OU) pour produire des signaux de blocage (T-Sp 1/2) pour les signaux de cadences du résultat, ainsi qu'un signal de commutation (T-UM1) pour initier un cycle de contrôle (P-Zyk) en fonction des conditions d'interruption qui sont présentes et de la cadence de contrôle ($T_{FA-F}$) du dispositif d'alimentation de cadences (TV), et que le dispositif de contrôle (PE) est constituée par une pluralité d'éléments de mémoire (MERB, CYCL, STOP-ANF, SREX, EPROC, TG-arrêt, SP-ZUG) qui indiquent les différentes conditions d'interruption et qui servent d'indicateurs pour le déroulement de la commande, ainsi que par deux compteurs (SREX-Z et EOREX-Z) pour caractériser le nombre de répétitions de même que par un réseau combinatoire logique (PE-LOG) qui détermine, indépendamment des contenus en informations des éléments de mémoire et des compteurs, en liaison avec les signaux de cadences ($T_{PE}$...) du cycle de contrôle (P-Zyk), la poursuite du déroulement du travail.

15. Dispositif selon la revendication 14, caractérisé par le fait que le générateur de cadences (TG) de l'alimentation en cadences (TV) comporte des dispositifs pour dériver un signal de contrôle supplémentaire (TG-AN) pour le dispositif de surveillance (UE), lors du redémarrrage du générateur de cadences (TG), après un arrêt du générateur.

**Claims**

1. Method for handling interruption conditions during the operating run in data processing systems having a store control unit (ZE) and a microprogramme control unit (SE) which is dependent upon a central clock pulse generator (TG) which, for the execution of an elementary operation (EO) in respect of each operating cycle (EO-Zyk) of the microprogramme control unit, generates a plurality of clock pulse signals by means of a clock pulse chain, and on the occurrence of an interruption condition can be interrupted at the end of the operating cycle (EO-Zyk) which is an progress by means of a monitoring device (UE) in combination with a test device (PE), characterised in that the monitoring device (UE) continuously gathers all the possible interruption conditions and is itself checked towards the end of each operating cycle to establish whether interruption conditions exist, that if such an interruption condition is established the clock pulse generator (TG) is temporarily switched over from the clock pulse chain for the operating cycle (EO-Zyk) to a test cycle clock pulse chain (TK-PE) in order to generate a special test cycle (P-Zyk) which serves to interrupt the normal run and whose clock pulse signals ($T_{PE}$...) control the test device (PE) which is coupled to the monitoring device (UE), and that during the test cycle (P-Zyk) the test device (PE) decides, in dependence upon the nature of the interruption condition, which measure must be subsequently initiated.

2. Method as claimed in claim 1, characterised in that the interruption conditions are firstly gathered and intermediately stored in a buffer register (MERB) which, together with additional markers (e.g. CYCL, SREX, EOREX, STOP-ANF) for controlling the test device (PE) at the end of each operating cycle (EO-Zyk), is tested by means of a window clock pulse train ($T_{FA-F}$) formed by the last (e.g. the two last (n-1) and n) clock pulse phases of the operating cycle, and that the interruption conditions intermediately stored in the buffer register (MERB) are transferred into a hardware malfunction register (MER) at the beginning of a test cycle (P-Zyk) and at the end of the test cycle are erased in the buffer register (MERB).

3. Method as claimed in one of the claims 1 to 2, characterised in that a test for the existence of an interruption condition is also carried out when the clock pulse generator (TG) restarts following a generator stop (with TG-AN), and in certain cases a test cycle (P-Zyk) is instigated immediately following the restart of the clock pulse generator (TG).

4. Method as claimed in one of the claims 1 to 3, characterised in that in order that a decision be made concerning the measures which are to be subsequently effected, in the case that a plurality of events occur simultaneously the test device (PE) checks these classified in accordance with priorities, that events not included in a test cycle (P-Zyk) may be intermediately stored in markers (e.g. STOP-ANF) and handled in subsequent test cycles, in which case following each test cycle (P-Zyk) firstly a switch-back is made to an operating cycle (EO-Zyk) for the microprogramme control unit, irrespectively of whether the operating cycle is executed immediately thereafter or not.

5. Method as claimed in one of the claims 1 to 4, characterised in that the switch-back to the operating cycle (EO-Zyk) automatically takes place at the end of each test cycle (P-Zyk) by means of the last clock pulse ($T_{PE-n}$) within the test cycle.

6. Method as claimed in one of the claims 1 to 5, characterised in that elementary operations (EO) and store accesses are repeated in the event of a malfunction, that the number of repeats is monitored (with SREX-Z), and that when a predetermined number (e.g. 16) of repeats is exceeded without success transfer is made to a fault handling routine (FB-ROUT), whereas in the case of successful repetition the operation of the microprogramme control unit is continued.

7. Method as claimed in claim 6, characterised in that in the event of a repeat a marker (SREX, EOREX) is set which following a successful repeat instigates a further switch-over to a test cycle (P-Zyk) for control purposes before the operation of the microprogramme control unit is continued.

8. Method as claimed in claim 6 or 7, characterised in that on the occurrence of a further malfunction during the fault handling routine following unsuccessful repetition (EPROC set), the system assumes the stop state.

9. Method as claimed in one of the claims 6 to 8, characterised in that in the event of the faulty execution of an elementary operation (EO), the last clock pulse (n) – which supplied the results of this operation – within the running operating cycle (EO-Zyk) is blocked so that the input values which existed at the start of the elementary operation (EO) are retained unchanged for repetitions of the elementary operation.

10. Method as claimed in one of the claims 6 to 9, characterised in that during a store access the execution of elementary operations (EO) by the microprogramme control unit is continued as far as possible, and faultily executed elementary operations are also repeated, but that in the event of a store fault the execution of elementary operations is stopped until the repetition of the store access, which is then put into effect, has been successful.

11. Method as claimed in one of the claims 1 to 10, characterised in that in the event of a stop request firstly a marker (STOP-ANF) is set, and that the stop state is not brought into effect until all the other interruption conditions have been handled by the test device (PE).

12. Method as claimed in one of the claims 1 to 11, characterised in that in the event of cyclic repetition (CYCL set) of the same elementary operation (EO) – apart from the repetition of the store access – only the occurrence of a stop request (STOP-ANF set) leads to the interruption of the cyclic repetition.

13. Method as claimed in one of the claims 1 to 12, for data processing systems with units (e.g. control units SE, processing unit VE and store access unit ZE) which are dependent upon a common microprogramme control unit but otherwise operate independently and partially in parallel, and with separate clock pulse chains (e.g. TK-SE, TK-VE, TK-ZE and TK-FA) which serve to control the operating run of these units, characterised in that during a test cycle (P-Zyk) all the other clock pulse chains are blocked with the exception of the test cycle clock pulse chain (TK-PE) for the test device (PE), that in the event of the faulty execution of an elementary operation (EO) the result clock pulses (e.g. $T_{FA-n}$ and $T_{SE-n}$) of all the clock pulse chains (e.g. TK-SA and TK-SE) in progress during this operating cycle (EO-Zyk) are blocked, and that in the event of the cyclic repetition (CYCL set) of the same elementary operation (EO) when the latter is satisfactorily executed only the result clock pulse ($T_{ZE-n}$) for the store access unit (ZE) is not blocked so that it continues to remain possible to initiate store accesses.

14. Arrangement for the implementation of the method claimed in one of the claims 1 to 13, characterised in that the clock pulse supply unit (TV) has at least two separate clock pulse chains for the acquisition of clock pulse signals forming an operating cycle (EO-Zyk) and a test cycle (P-Zyk), and a clock pulse chain switch-over unit (TK-UM), and devices for blocking the result clock pulse signals for the operating cycle (EO-Zyk) and for generating a test clock pulse signal (e.g. $T_{FA-F}$) for the monitoring device (UE), that the monitoring device (UE) consists of a series of logic linking units (AND, OR) for the generating of the blocking signals (T-Sp 1/2) for the result clock pulse signals, and a switch-over signal (TU--UM1) for initiating a test cycle (P-Zyk) in dependence upon the existing interruption conditions and the test clock pulse signal ($T_{FA-F}$) of the clock pulse supply unit (TV), and that the test device (PE) comprises a plurality of storage elements (MERB, CYCL, STOP-ANF, SREX, EPROC, TG-HALT, SP-ZUG) which indicate the individual interruption conditions and serve as markers for the control flow, and two counters (SREX-Z and EOREX-Z) which serve to characterise the number of repetitions, and a logic linkig network (PE-LOG) which, in dependence upon the information contents of the storage elements and the counters, in association with the clock pulse signals ($T_{PE}$ . . .) of the test cycle (P-Zyk), determines the continuation of the operating run.

15. Arrangement as claimed in claim 14, characterised in that the clock pulse generator (TG) of the clock pulse supply unit (TV) contains devices for the acquisition of a further test signal (TG-AN) for the monitoring device (UE) when the block pulse generator (TG) restarts following a generator stop.

FIG 1

# FIG 2

FIG 3

19

# FIG 4

# FIG 5

MERB → MER   $T_{PE-e}$

$T_{PE-F}$

ADV mitSTOP ?   n

j   $T_{PE-d}$

SREX/ EOREX =0   n

EU/SP- Fehler ?   n

j

1→STOP-ANF

GRS- FLAG =1   n

j

$T_{PE=n}$

SET EOREX-Z
1→EOREX

SP- Fehler ?   n

j

SET SREX-Z
1→SREX

ADV mitFB- ROUT ?   n

STOP- ANF=1   n

EOREX =1   n

SREX =1   n

$T_{PE-n}$

j

j

j

j

FIG 6

EOREX-Z =0   n

SREX-Z =0   n

j

j

$T_{PE-n}$   EOREX-Z /: 1

SREX-Z /: 1   $T_{PE-n}$

$T_{PE-i}$

EPROC =1   j

1→TG-HALT
1→STOP-ANF   $T_{PE-d}$

n

CYCL =1   j

n

CYCL =1   n

SP- ZUG=1   n

j

j

0→SREX
0→EOREX
1→EPROC   $T_{PE(n-1)}$

$T_{PE-e}$

1→FB-ROUT   $T_{PE-n}$

0→MERB

0→STOP-ANF
RTO SVP   $T_{PE-n}$

TG-HALT

RESTART SP

FB-ROUT

EO-Zyk

SVP-ANF

TG-STOP

SP-ANF

23

FIG 7

TK-PE  
TK-FA  
TK-VE  
TK-SE

P-Zyk  E01  
1.Wiederholung  
P-Zyk  E01  
2.Wiederholung  
P-Zyk  E02  E03  E04

FIG 8

TK-PE  
TK-FA  
TK-VE  
TK-SE

P-Zyk  E01  
1.Wiederholung  
P-Zyk  E01  
2.Wiederholung  
E01  
16.Wiederholung  
P-Zyk  
FB-ROUT  
Einsprungs-adresse  
Fehlerprogramm

25

## FIG 9

TK-PE  
SP-Zugriff  
TK-FA  
TK-VE/ZE  
TK-SE  

P-Zyk   P-Zyk   P-Zyk   P-Zyk  
Wiederholung  

E01   E02   E02   E03   E04   E05....  
1.Wiederholung

## FIG 10

TK-PE  
SP-Zugriff  
TK-FA  
TK-VE/ZE  
TK-SE  

P-Zyk   P-Zyk   P-Zyk   P-Zyk   P-Zyk  
FB-ROUT  
Wiederholung  

E01   E01   Einsprungs-   STOP  
Widerholung   adresse   SVP-ANF